# EUROPÄISCHE PATENTANMELDUNG

(11) **EP 3 508 053 A1**
(43) Veröffentlichungstag der Anmeldung: **10.07.2019**
(21) Anmeldenummer: 19000001.8
(22) Anmeldetag: 02.01.2019
(51) Int. Cl.: A01F 25/20, A01F 29/02

(54) **SCHREDDER UND FAHRZEUG**

(30) Priorität: 03.01.2018 DE 202018000020 U
(71) Anmelder: Quelle, Dietmar, 48480 Lünne (DE)
(72) Erfinder: Ockens, Patrick, 14467 Postdam (DE)
(74) Vertreter: Busse, Harald F.W.

(57) **Zusammenfassung**

Ein Schredder (1) zum Abtrag von insbesondere biologischem, hoch aufgeschichtetem Material (M), wird so ausgebildet, daß der Schredder (1) an einem Anbaugerät (2) für ein Fahrzeug (3) gehalten ist und von diesem in das zu bearbeitende Material (M) direkt zum Materialabtrag hineinfahrbar ist, wobei von dem Schredder (1) abgetragenes Material von diesem mit einer Komponente quer zur Fahrtrichtung (F) des Fahrzeugs (3) auswerfbar ist.

## Beschreibung

Die Erfindung betrifft einen Schredder zum Abtrag von insbesondere biologischem, hoch aufgeschichtetem Material nach dem Oberbegriff des Anspruchs 1 sowie ein Fahrzeug zum Materialabtrag. Das Material kann dabei sehr unterschiedliche Konsistenz und Größe der aufgeschichteten Teile aufweisen. Beispielweise können auch größere Äste enthalten sein, deren Herausziehen einen größeren Materialschwall nach sich zieht.

Es ist bekannt, insbesondere biologisches Material, wie etwa Grünschnitt, Äste, Material für Biogasanlagen, Restmaterialien aus Gärten, Baufeldräumungen, Altholz u. ä., in sog. Mieten anzuordnen, die mehrere Meter hoch sind und eine gegenüber der Höhe große Längserstreckung haben können. Wenn derartiges Material abgetragen und zerkleinert werden soll, wird häufig mit einem Radlader gearbeitet, der mit seiner Schaufel immer wieder quer in diese Mieten hineinfährt, Material herauslöst und dieses dann einem Schredder (Großhäcksler) zuführt, der seinerseits nach Zerkleinerung zum Auswurf des zerkleinerten Materials einen motorisch angetriebenen Förderer umfaßt und so das gehäckselte Material an eine zum Weitertransport geeignete Stelle fördert.

Dies ist mit einem hohen Maschinenaufwand verbunden, so daß erhebliche Kosten entstehen. Insbesondere muß ein eigener Radlader vorgesehen werden. Der Großhäcksler ist eine ebenfalls aufwendige Anlage, die Fördereinrichtungen benötigen zudem Platz und müssen an die jeweils zur Verfügung stehenden Räume angepaßt werden. Investitions- und Betriebskosten sind daher hoch.

Der Erfindung liegt das Problem zugrunde, hier eine Verbesserung zu erreichen.

Die Erfindung löst dieses Problem durch einen Schredder mit den Merkmalen des Anspruchs 1 sowie durch ein Fahrzeug mit den Merkmalen des Anspruchs 15, deren Wirkungskreis nicht auf aufgeschichtete Mieten beschränkt ist.

In der Ausbildung nach Anspruch 1 ist dadurch, daß der Schredder an einem Anbaugerät für ein Fahrzeug gehalten ist, ein direktes Einfahren des Schredders in die genannten Mieten zum Materialabtrag ermöglicht. Der Schredder, der häufig auch als Häcksler bezeichnet wird, da er direkt beim Herausreißen von Material dieses auch zumindest teilweise zerkleinert, ist damit mobil, so daß ein Radlader oder ähnliches separates Gerät entbehrlich ist. Dadurch, daß von dem Schredder abgetragenes Material von diesem mit einer Komponente quer zur Fahrtrichtung des Fahrzeugs auswerfbar ist, ist auch die Weiterförderung des abgetragenen Materials in dieses eine Gerät mit integriert. Der Betriebs- und Investitionsaufwand sind damit erheblich vermindert. Ein solcher hoch integrierter Schredder liegt vom Investitionsaufwand bei ca. einem Fünftel bis einem Viertel der o. g. einzelnen Geräte.

Das Material kann in einer fahrenden Bewegung längs zur langen Kante einer längs erstreckten Miete herausgelöst werden, bei der der Schredder direkt in die Miete eingreift und hereinschneidet, so daß sich ein kontinuierlicher Abtrag während dieser Vorbeifahrt ergibt - anders als bei einem Radlader oder ähnlichem Gerät, das diskontinuierlich immer wieder ungefähr quer in die Miete hereingefahren wird und jedesmal anschließend umdrehen und das abgenommene Material an die nächste Bearbeitungseinheit übergeben muß. Mit der Erfindung kann jeweils die ganze Längserstreckung des aufgestapelten Materials in einem Schritt kontinuierlich abgetragen werden.

Günstig ist der Schredder an dem Anbaugerät in verschiedenen vertikalen Höhen in das Material hineinfahrbar, so daß dieses Schicht für Schicht von oben nach unten oder auch von unten nach oben abgetragen werden kann.

Sofern der Schredder einen Rotationskörper mit einer abgewinkelt bis quer zur Fahrtrichtung erstreckten Drehachse umfaßt, der außenseitig mit einer Mehrzahl von radial vorstehenden Zähnen oder dergleichen Reiß- oder Schlagmitteln versehen ist, kann dieser Rotationskörper einerseits durch seine Drehung den Materialabtrag und andererseits auch eine Zerkleinerung von abgetragenem Material bewirken. Zudem kann durch die Drehung und die dadurch bewirkte Zentrifugalkraft auch integral die Auswurffunktion des Materials zu dessen Weiterbeförderung erreicht werden. Ein solcher Rotationskörper ist daher besonders vorteilhaft.

Vorteilhaft ist der Rotationskörper schräg zur Horizontalen einstellbar, so daß sowohl der Winkel seines Eingriffs als auch die Auswurfrichtung dadurch vorwählbar und stabil während des Betriebs halterbar sind.

Der Rotationskörper kann frei von ihn nach unten abstützenden Kufen, Rädern oder ähnlichen Führungsmitteln ausgebildet sein. Er kann dann frei und in beliebiger Höhe gehalten und in die Miete eingefahren werden. Alternativ ist auch eine Abstützung über Kufen, Stützräder oder ähnliches möglich.

Ein besonders hoher Materialabtrag für einen schnellen Arbeitsfortschritt ist ermöglicht, wenn der Rotationskörper einen mittleren Durchmesser von zumindest 700 Millimetern aufweist und die Zähne oder dergleichen Reiß- oder Schlagmittel mindestens 12 Millimeter , insbesondere deutlich mehr, gegenüber einer Außenfläche des Rotationskörpers radial vorragen, wobei mehrere Zähne oder dergleichen Reiß- oder Schlagmittel über die axiale Erstreckung des Rotationskörpers verteilt angeordnet sind.

Das herausgelöste Material kann in einem Arbeitsgang zerkleinert werden, in dem die Zähne oder dergleichen Reiß- oder Schneidmittel mit zumindest einer dem Rotationskörper zugeordneten Gegenschlag- oder -schneidkante zusammenwirken können. Zwischen der Außenfläche des Rotationskörpers und der Gegenschlag- oder - schneidkante findet dann ein Zerkleinern auf eine Größe statt, die von dem Abstand zwischen dieser Kante und der Außenfläche des Rotationskörpers abhängt.

Die zumindest eine Gegenschlag- oder -schneidkante sollte für eine hohe Stabilität mindestens 20 Millimeter stark sein.

Sie kann für eine gleichmäßige Größe des Materials parallel zur Außenfläche des Rotationskörpers stehen.

Günstig steht die zumindest eine Gegenschlag- oder -schneidkante unterhalb der Erstreckung des Rotationskörpers. Die Zerkleinerung findet dann im unteren Bereich statt, so daß die Schwerkraft den Materialfluß zu diesem Schneidbereich unterstützt. Die Rotation läuft auf die Gegenschneidkante zu.

Weiter ist es sehr vorteilhaft, wenn bezüglich der Drehrichtung des Rotationskörpers der Schredder einen der Gegenschlag- oder - schneidkante zumindest eine Zerkleinerungsleiste nachgeordnet ist, in die die Zähne kämmend eingreifen, so daß dort eine weitere Zerkleinerung stattfinden kann. Der Rotationskörper ist so bezüglich der Drehrichtung hinter der Gegenschlag- oder -schneidkante von einer Art äußerem Mantel umgeben. Zwischen den genannten Teilen ergibt sich ein ringförmiger und axial außerhalb der Zähne gleichmäßig dicker Spalt, der über einen Teil des Umfangs ab der Gegenschlag- oder -schneidkante erstreckt ist und in dem eine Materialzerkleinerung und Weiterförderung stattfinden kann.

Sofern an zumindest einem vom Fahrzeug weg weisenden axialen Rand des Rotationskörpers ein seitliches Abweiseblech vorgesehen ist, kann die Eindringbreite klar definiert werden. Es wird sichergestellt, daß nur so viel Material abgetragen wird, wie auch über die axiale Länge des Rotationskörpers zerkleinert werden kann.

Insbesondere ist das seitliche Abweiseblech, das feststehend ist, in axialer Richtung maximal 50 Millimeter, besser weniger, von einem ersten Zahn oder dergleichen Reiß- oder Schlagmittel beabstandet, um so einen Einzug von zu großen Teilen und ein eventuelles Verklemmen solcher Teile zu vermeiden. In radialer Richtung überragt das Abweiseblech vorteilhaft ein wenig den Rotationskörper, um dessen stirnseitigen Randbereich im wesentlichen frei von grobem Materialeintrag zu halten, der eine Verklemmgefahr mit sich brächte. Dieses Abweiseblech bildet auch einen Spritzschutz.

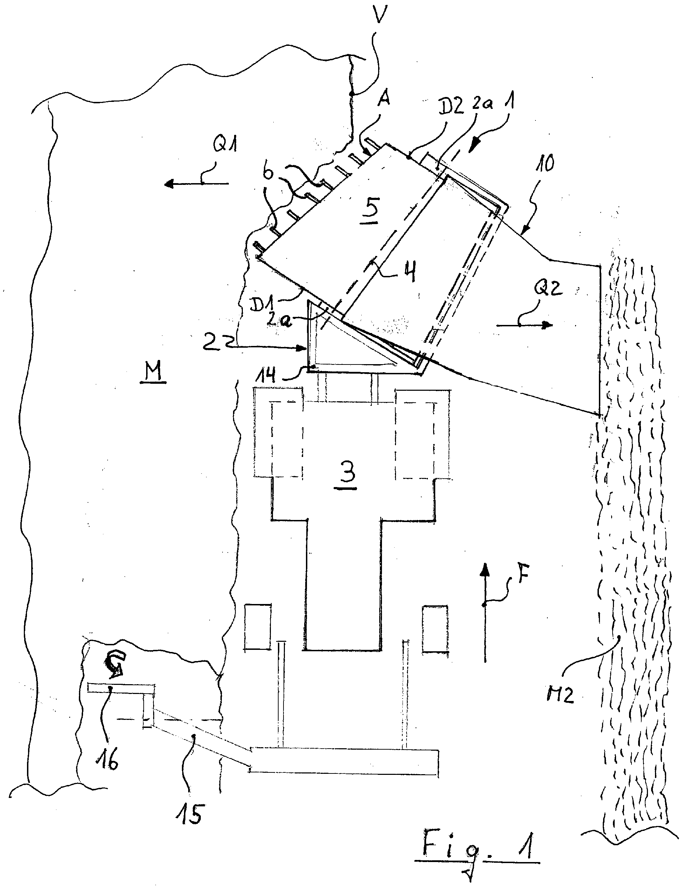

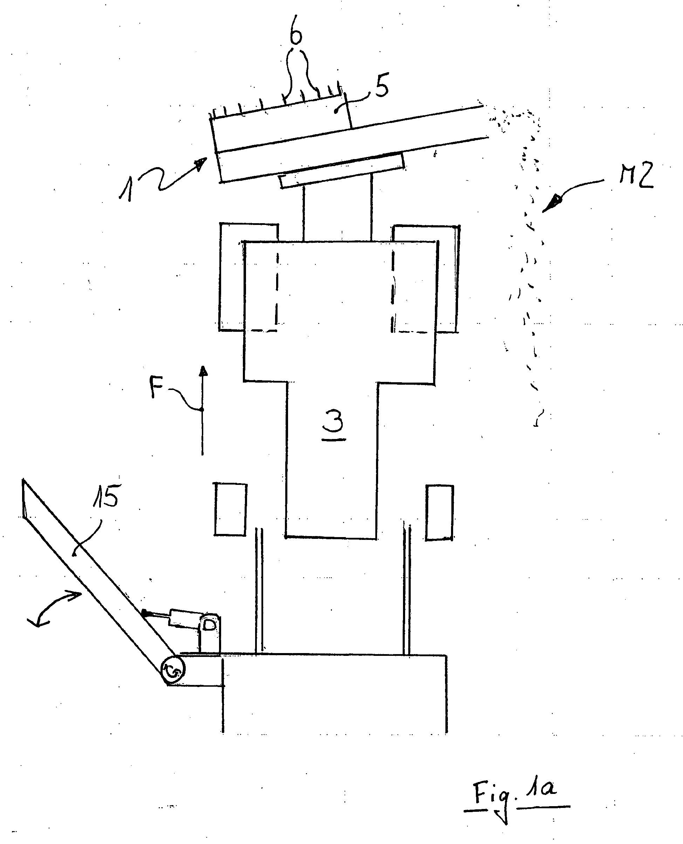

Um einen günstigen Anstellwinkel des Rotationskörpers gegenüber der Miete ohne die Gefahr eines Festfressens zu erreichen, kann wie in Figur 1 der Rotationskörper über seinen axialen Verlauf einen variierenden Durchmesser aufweisen.

Insbesondere verkleinert sich der Durchmesser in Fahrtrichtung, um so die Achse des Rotationskörpers nur gering gegen die Fahrtrichtung anzuwinkeln und dennoch eine stärker geneigte Außenfläche zu haben, die in die Miete eingreifen kann.

Sehr günstig ist die Durchmesserzunahme gleichmäßig. Dies läßt sich erreichen, wenn der Rotationskörper eine im wesentlichen kegelstumpfförmige Außengestalt aufweist.

Der Rotationskörper kann dann im spitzen Winkel zur Fahrtrichtung stehen und mit seinem hinteren Bereich nach außen greifen. Hierfür steht günstig die Achse des Rotationskörpers derart abgewinkelt zur Fahrtrichtung steht, daß sie in Fahrtrichtung auf die Quermitte des Fahrzeugs zuläuft.

Der Schredder kann sehr vorteilhaft in eine erste Querrichtung von dem Fahrzeug aus seitlich in die jeweilige Miete ausgreifen, und von dem Schredder abgetragenes Material kann in einen Bereich einer gegenüber liegenden Querrichtung bezüglich der Fahrtrichtung des Fahrzeugs ausgeworfen werden.

Für die gewünschte hohe Integration und Senkung des konstruktiven Aufwands ist sehr günstig der Rotationskörper zumindest bereichsweise von einer mit einer Querkomponente fördernden Auswurfeinrichtung übergriffen, in den der Rotationskörper während seiner Drehung automatisch einfördert.

Durch die Bewegung des in der Rotation geförderten Materials kann die Auswurfeinrichtung frei von motorisch antreibbaren Fördermitteln ausgebildet sein, was den Aufwand weiter verringert.

Für einen effektiven Auswurf weist die Auswurfeinrichtung einen äußeren Trichter auf, der in einen quer ausgreifenden Wurfkanal übergeht. "Quer" heißt dabei nicht zwingend 90° zur Fahrtrichtung.

Für eine gute Verteilung und gleichmäßige Ausnutzung des Wurfkanals kann in der Auswurfeinrichtung eine Mehrzahl von das eintretende Material schräg umlenkenden Leitblechen vorgesehen sein. Diese können zumindest teilweise über ihren Verlauf von unten nach oben einen sich zueinander vergrößernden Abstand aufweisen, um Verstopfungen vorzubeugen.

Ein Fahrzeug mit einem an einem Anbaurahmen gehaltenen Schredder nach einem der Ansprüche 1 bis 14 ist gesondert beansprucht.

Der Schredder ist dabei insbesondere an eine Dreipunkthydraulik des Fahrzeugs ansetzbar und von dieser bewegbar ist.

Weiter kann dem Fahrzeug oder auch dem Schredder selbst ein seitlich ausgreifender Schneid- und/oder Räumarm zugeordnet sein, der in einer Ebene oberhalb des Schredders arbeiten kann und Material aus der Miete nach unten wirft, daß dann von dem Schredder verarbeitet werden kann, insbesondere bei einem nächsten Arbeitsgang.

Insgesamt ergeben sich durch den einfachen Aufbau des Schredders Kostenvorteile gegenüber herkömmlichen Geräten und Verfahren. Es erübrigen sich Hauptbestandteile bekannter Großschredder wie Fahrgestell, Antriebsmotor, Einzugband und -rolle, Austragband inklusive deren Antriebe und Steuerungen. Weiter wird ein Beschickungsgerät wie ein Radlader oder Bagger eingespart. Zudem werden Straßen-Transportfahrzeuge für Großschredder und Beschickungsgerät eingespart, da das hier gezeigte Fahrzeug selbstfahrend sein kann. Durch zusätzliche Beschäftigung werden die Fixkosten eines Fahrzeugs, wie zum Beispiel eines schweren Schleppers, bei Lohunternehmen oder öffentlichen Körperschaften häufig ohnehin vorhanden, reduziert.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: einen an einem Fahrzeug gehaltenen Schredder bei Abtrag einer seitlich stehenden Miete in Draufsicht, wobei der Schredder eine kegelstumpfartige Umrißgestalt aufweist,
- Fig. 1a: eine ähnliche Ansicht wie Figur 1, jedoch mit einem rundzylindrischen Rotationskörper und einem abweichenden Anstellwinkel gegenüber der Fahrtrichtung,
- Fig. 2: eine schematische seitliche, angeschnittene Ansicht eines Rotationskörpers mit Teilen der Auswurfeinrichtung und in diese integrierten Leitblechen,
- Fig. 3: eine Rückansicht eines Schredders mit Rotationskörper und Gegenschneid- oder -schlagkante,
- Fig. 4: eine perspektivische Ansicht eines Schredders mit übergreifender Auswurfeinrichtung und eingezeichneter Fahrtrichtung,

Gemäß dem in Figur 1 dargestellten Ausführungsbeispiel ist am linken Bildrand von oben eine typische sog. Miete M aus aufgeschichtetem biologischem Material dargestellt. Derartige Mieten sind häufig mehrere Meter hoch, zum Beispiel drei bis vier Meter, und können einige bis mehrere zehn Meter lang sein - je nach Platzverhältnissen.

Da der Platzbedarf derartiger Mieten M hoch ist, besteht ein Interesse daran, das darin gehaltene Material schnell zu zerkleinern und umzusetzen, um es beispielsweise einer Kompostierung, Biogasanlage oder anderen Verwendung zuführen zu können.

Hierfür dient der während des Einsatzes hier in Fahrtrichtung F vorne liegende Schredder 1, der an einem Anbaugerät 2, etwa mit einem Rahmen 14, für ein Fahrzeug 3 gehalten ist. Der Rahmen 14 kann über Lagerungen 2a den Schredder 1 an gegenüberliegenden Seiten halten, so daß er zumindest teilweise gegenüber dem Fahrzeug 3 beweglich ist, zum Beispiel rotationsbeweglich.

Das Fahrzeug 3 kann geschoben oder gezogen oder insbesondere ein Selbstfahrer sein, zum Beispiel ein Schlepper, ein Unimog oder eine Erntemaschine. Dieses kann mit der Erfindung günstig längs zur lang erstreckten Vorderkante V der Miete bewegt werden und dort während einer Vorbeifahrt kontinuierlich Material abtragen.

Der Schredder 1 ist direkt in das zu bearbeitende Material (M) direkt zum Materialabtrag hineinfahrbar, wobei von dem Schredder 1 abgetragenes Material aus der Miete M von diesem mit einer Komponente quer zur Fahrtrichtung F des Fahrzeugs 3 auswerfbar ist. Sowohl der Materialabtrag als auch ein seitlich versetzter Auswurf des dann zerkleinerten Materials in einer Materialablage M2, zum Beispiel auf einen versetzten Transportplatz oder einen Ladewagen, erfolgen damit integral von dem nur einen Schredder.

Dabei kann der Schredder 1 höhenverlagerbar an dem Fahrzeug 3 gehalten sein und mit dem Anbaugerät 2 in verschiedenen vertikalen Höhen in das Material der Miete M hineinfahrbar sein. Alternativ ist auch möglich, daß der Schredder immer im unteren Bereich in die Miete eingreift.

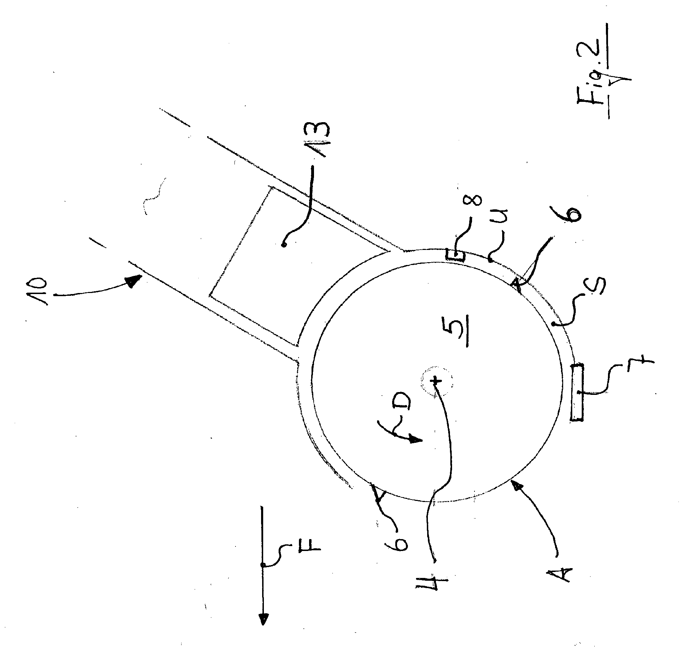

Der gezeichnete Schredder 1 umfaßt einen Rotationskörper 5 mit einer abgewinkelt bis quer zur Fahrtrichtung F erstreckten Drehachse 4. Hier steht die Drehachse 4 gemäß Figur 1 um ca. 30° bis 40° abgewinkelt zur Fahrtrichtung F. Die Achse 4 kann dabei horizontal oder nahezu horizontal verlaufen. Dabei steht die Achse 4 des Rotationskörpers 5 derart abgewinkelt zur Fahrtrichtung F, daß sie in Fahrtrichtung F auf die Quermitte des Fahrzeugs (3) zuläuft. Bei der zylindrischen Ausbildung nach Figur 2 ist der Anstellwinkel deutlich größer und liegt bei etwa 65° bis 75°.

In der Ausbildung nach Figur 1 ist der Rotationskörper 5 nicht parallelwandig, sondern zeigt im wesentlichen eine Kegelstumpfform. Der mittlere Durchmesser beträgt hier beispielhaft 700 Millimeter. Dabei liegt der größere Durchmesser D1 bezüglich der Fahrtrichtung F hinten und beträgt zum Beispiel 900 bis 1200 Millimeter, während der kleinere Durchmesser D2 nach vorne weist und ca. 450 bis 700 Millimeter beträgt.

Der Rotationskörper 5 ist außenseitig mit einer Mehrzahl von radial vorstehenden Zähnen 6 oder dergleichen Reiß- oder Schlagmitteln versehen. Die Zähne 6 oder dergleichen Reiß- oder Schlagmittel ragen mindestens 12 Millimeter, vorteilhaft mehr als 80 Millimeter, gegenüber einer Außenfläche (Mantelfläche) A des Rotationskörpers 5 radial nach außen vor. Dabei sind mehrere Zähne 6 oder dergleichen Reiß- oder Schlagmittel über die axiale Erstreckung des Rotationskörpers 5 verteilt angeordnet. Diese müssen nicht in einer Reihe nebeneinander liegen, sondern können auch über Umfang der Außenfläche A versetzt zueinander sein.

Diese Zähne 6 oder dergleichen Reiß- oder Schneidmittel können als massive Stahlteile, eventuell mit einer gehärteten Spitze, ausgebildet und auch auswechselbar an der Mantelfläche A angeordnet sein. Die Zähne 6 oder dergleichen Reiß- oder Schlagmittel können direkt in das Material der Miete M eingreifen, wobei durch den relativ kleinen Anstellwinkel der Drehachse 4 gegenüber der Fahrtrichtung F sichergestellt ist, daß sich die Zähne 6 auch bei grobem Material in der Miete M (zum Beispiel Äste oder Wurzeln) das Material zerkleinern und abtragen kann. Der Rotationskörper kann dabei im Betrieb einige hundert bis über tausend Umdrehungen pro Minute ausführen.

Weiter können die Zähne 6 mit zumindest einer dem Rotationskörper 5 zugeordneten Gegenschlag- oder -schneidkante 7 zusammenwirken. Diese Kante 7 steht parallel zur Außenfläche A und weist einen radialen Abstand von einigen Zentimetern zu dieser auch, zumindest soviel, daß die Zähne 6 in dem Spalt S frei laufen können. Die Gegenschneide 7 kann dabei in Doppelfunktion auch gleichzeitig eine Kufe oder ähnliches ausbilden, die den Schredder 1 auch im Betrieb gegenüber dem äußeren Boden abstützen kann.

Dies ist möglich, da die zumindest eine Gegenschlag- oder - schneidkante 7 unterhalb der Erstreckung des Rotationskörpers 5 steht. Sie ist weiter formstabil ausgeführt, etwa aus Stahl, und untergreift den Rotationskörper 5 über seine axiale Länge.

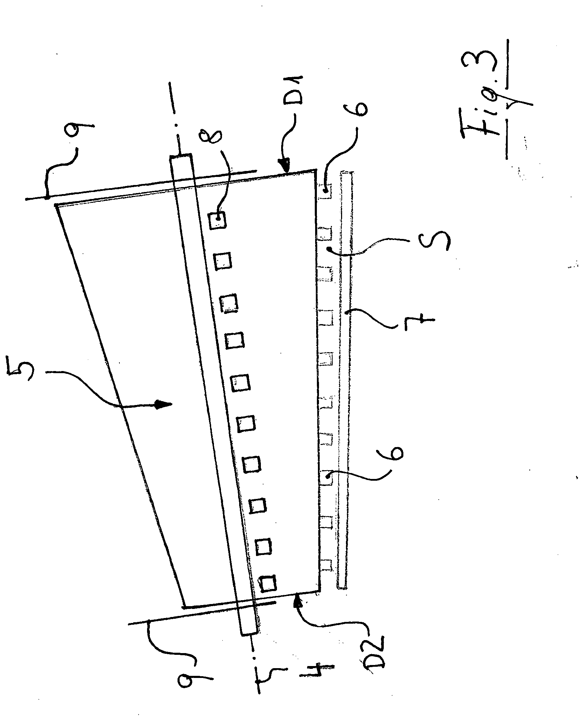

Es ist weiter für eine effektive Materialzerkleinerung günstig, wenn bezüglich der Drehrichtung D des Rotationskörpers 5 des Schredders 1 der Gegenschlag- oder -schneidkante 7 zumindest eine weitere Zerkleinerungsstufe nachgeordnet ist. Insbesondere kann dies zumindest eine Zerkleinerungsleiste 8 sein, in die die Zähne 6 kämmend eingreifen. Über die axiale Erstreckung umfaßt die feste Zerkleinerungsleiste 8 daher eine Mehrzahl von Reißmitteln oder Zähnen (sh. Figur 3).

Diese sind innen an einem fest stehenden Außenmantel U angeordnet, der den Rotationskörper 5 radial außen über einen Teil des Umfangs umgibt, insbesondere im unteren und bezüglich der Fahrtrichtung hinteren Bereich bis hin zu einer Auswurfeinrichtung 10, die weiter unten noch näher beschrieben ist.

In der Detailansicht des Rotationskörpers 5 nach Figur 3 ist gut zu erkennen, daß an zumindest einem vom Fahrzeug 3 weg weisenden axialen Rand (also bei der Stirnfläche mit dem Durchmesser D1 und/oder an der gegenüberliegenden Stirnfläche mit dem Durchmesser D2) des Rotationskörpers 5 ein seitliches Abweiseblech 9 vorgesehen ist. Dieses liegt in geringem Abstand zu den axial äußersten Zähnen 6 und dreht selbst nicht mit, sondern trägt das Lager 2a und wirkt wie eine Schneid- und Schutzkante und verhindert, daß sich Material am axialen Rand des Rotationskörpers 5 verklemmt.

Wie bereits oben angedeutet, ist der Rotationskörper 5 zumindest bereichsweise, nämlich im bezüglich der Fahrtrichtung F hinteren und oberen Bereich (Figur 2) von einer mit einer Querkomponente in Richtung Q2 fördernden Auswurfeinrichtung 10 übergriffen. In diese tritt das von der fördernden Trommel, nämlich dem Rotationskörper 5, mitgerissene Material ein. Auch diese Auswurfeinrichtung 10 ist integraler Bestandteil des Schredders 1.

Diese Auswurfeinrichtung kann einen äußeren, schräg nach oben laufenden Trichter 11 ausbilden, der in einen im wesentlichen horizontal und quer ausgreifenden Wurfkanal 12 übergeht.

Dadurch, daß das abgenommene Material vom Rotationskörper 5 mit einer Zentrifugalkraft versehen ist, kann es allein dadurch die Auswurfeinrichtung 10 durchlaufen und als Materialablage M2 ausgeworfen werden. Die Auswurfeinrichtung 10 kann daher frei von motorisch antreibbaren Fördermitteln ausgebildet sein.

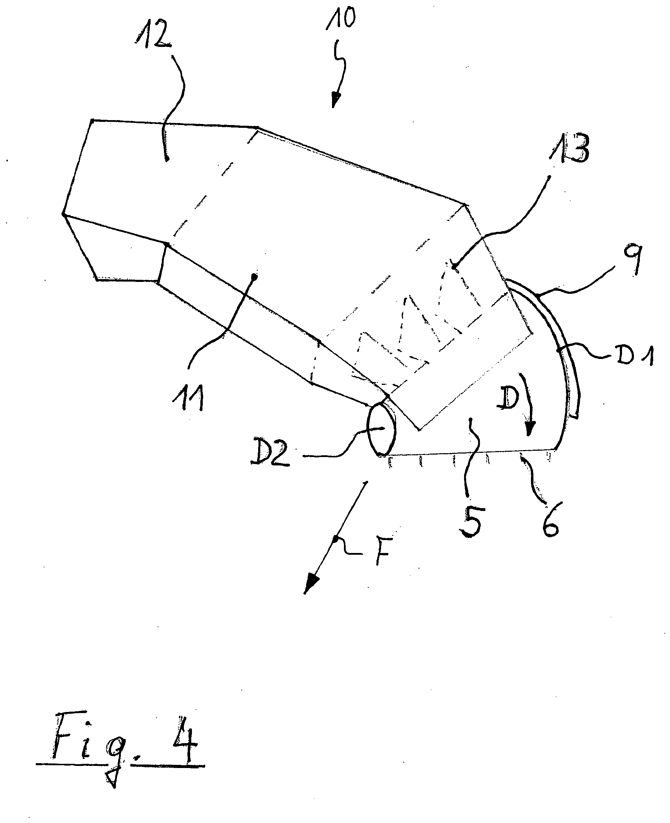

Wie etwa in Figur 4 gut sichtbar ist, ist in der Auswurfeinrichtung 10 eine Mehrzahl von das eintretende Material schräg umlenkenden Leitblechen 13 vorgesehen. Diese sorgen für eine gute Ausnutzung der Breite der Auswurfeinrichtung und können Material noch weiter auseinanderreißen. Diese Leitbleche 13 können zumindest teilweise über ihren Verlauf von unten nach oben einen sich zueinander vergrößernden Abstand aufweisen. Dadurch ist einer Verstopfungsgefahr auch bei feuchtem Material vorgebeugt, der sich im Verlauf erweiternde Abstand sorgt für eine gute Materialabfuhr.

Im Betrieb wird der Schredder 1 kontinuierlich entlang der Vorderkante V der abzuräumenden Miete M bewegt. Dies ist sehr viel günstiger und schneller als ein diskontinuierliches Einfahren in die Miete, zum Beispiel mit einer Fräse oder einem Radlader. Diese müßte danach jedes Mal gedreht und entleert werden, um an einer benachbarten Stelle erneut quer anzufahren.

Bei dem hier gezeigten kontinuierlichen Abtrag kann der Schredder 1 entlang der langen Vorderkante V kontinuierlich in Fahrtrichtung F verfahren werden und dabei in eine erste Querrichtung Q1 von dem Fahrzeug 3 aus seitlich ausgreifen und mit den ausgreifenden Zähnen 6 rotierend von oben nach unten in die Miete M eingreifen. Der Schredder 1 kann dabei auf dem Boden aufliegend vorwärts gleiten.

Dabei von dem Schredder 1 abgetragenes Material wird durch die Rotation der Trommel 5 in die Auswurfeinrichtung 10 geleitet und in einen Bereich einer gegenüber liegenden Querrichtung Q2 bezüglich der Fahrtrichtung F des Fahrzeugs 3 ausgeworfen. Dort kann sich daher eine zerkleinerte Materialablage M2 mit deutlich verringerten Ausmaßen und verminderten Lufträumen im Material ergeben.

Für eine genannte bodennahe Erfassung des Mietenmaterials ist am Fahrzeug 3 ein Arm 15 angelenkt. Dieser greift in der ersten Querrichtung Q1 zur Fahrtrichtung F des Fahrzeugs 3 aus, dringt weiter oben in die Miete M ein und löst bei der Fahrt des Fahrzeugs 3 in Fahrtrichtung F nach der Prinzip eines Graderschars Material aus der Miete M, das wobei das Material zum Fuß der Miete M fällt, von wo es beim folgenden Arbeitsgang des Schredders 1 verarbeitet wird. Zur Vorlieferung von Material aus verdichteten Mieten M kann der Arm 15 mit einer langsam rotierenden Kralle 16 versehen sein. Der Arm 15 ist höhenverstellbar, was über eine separate Vorrichtung oder über eine Anlenkung am Frontlader des Fahrzeugs 3 erfolgen kann.

Der Schredder 1 wird zur Betriebaufnahme mittels des Fahrzeugs 3 an die Miete M herangefahren, und der Rotationskörper 5 wird beschleunigt. Der Arm 15 wird in den Scheitel der Miete M hineingedrückt. Dann fährt das Fahrzeug 3 im Superkriechgang den Schredder 1 in die Miete M. Der Rotationskörper 5 erfaßt das Mietenmaterial, wobei dieses ein erstes Mal zerkleinert wird. Dieses vorzerkleinerte Material gelangt dann an die Gegenschlagkante 7, wo eine zweite Zerkleinerung erfolgt. Beim Passieren der dann folgenden Zerkleinerungsleiste 8 wird das Material ein drittes Mal zerkleinert. Dan nun fertig zerkleinerte Material wird mit hoher Drehgeschwindigkeit in die Auswurfeinrichtung 10 geschleudert, wo es über die Leitbleche 13 zum Trichter 11 gelenkt und über den Wurfkanal 12 in der anderen Querrichtung Q2 am Erdboden oder auf ein Transportband oder -fahrzeug abgelegt wird (M2). Der Arm 15 bzw. ggf. auch die Kralle 16 fördern dabei Material aus der Miete M für den folgenden Arbeitsgang vor.

Ein Schlepper oder Traktor oder ein ähnliches Fahrzeug 3 kann - wie beschrieben - mit einem Anbaurahmen 14 zur Halterung des Schredders 1 und ggf. auch mit einem Arm 15 versehen sein.

Insbesondere ist der Schredder 1 an eine Dreipunkthydraulik des Fahrzeugs 3 ansetzbar und von dieser bewegbar ist.

Zudem ist dem Fahrzeug ein seitlich ausgreifender Schneid- und/oder Räumarm 15 zugeordnet ist, der in einer Ebene oberhalb des Schredders 1 und in Fahrtrichtung insbesondere diesem und dem Fahrzeug 3 nachgeordnet arbeiten kann. Damit wird die folgende - dann wieder kontinuierliche - räumende, zerkleinernde und umsetzende Vorbeifahrt an der Miete M vorbereitet.

Alle diese Funktionen sind in den Schredder 1 und/oder das Fahrzeug 3 integriert.

**Bezugszeichenliste:**

| | | | |
|---|---|---|---|
| 1 | Schredder, | Q1 | erste Querrichtung, |
| 2 | Anbaugerät, | Q2 | gegenüber liegende, |
| 2a | Lagerungen, | | zweite Querrichtung, |
| 3 | Fahrzeug, | D | Drehrichtung, |
| 4 | Drehachse, | D1 | erster Durchmesser, |
| 5 | Rotationskörper, | D2 | zweiter Durchmesser, |
| 6 | Reiß- oder Schlagmittel, | M | Miete, |
| 7 | Gegenschlag- oder | M2 | Materialablage, |
| | -schneidkante, | F | Fahrtrichtung, |
| 8 | Zerkleinerungsleiste, | A | Außenfläche |
| 9 | Abweiseblech, | | (Mantelfläche), |
| 10 | Auswurfeinrichtung, | S | Spalt, |
| 11 | Trichter, | U | Außenmantel |
| 12 | Wurfkanal, | | |
| 13 | Leitbleche, | | |
| 14 | Anbaurahmen, | | |

## Patentansprüche

1. Schredder (1) zum Abtrag von insbesondere biologischem, hoch aufgeschichtetem Material (M),
**dadurch gekennzeichnet,**
**daß** der Schredder (1) an einem Anbaugerät (2) für ein Fahrzeug (3) gehalten ist und von diesem in das zu bearbeitende Material (M) direkt zum Materialabtrag hineinfahrbar ist, wobei von dem Schredder (1) abgetragenes Material von diesem mit einer Komponente quer zur Fahrtrichtung (F) des Fahrzeugs (3) auswerfbar ist.

2. Schredder (1) nach Anspruch 1,
**dadurch gekennzeichnet,**
**daß** der Schredder (1) einen Rotationskörper (5) mit einer abgewinkelt bis quer zur Fahrtrichtung (F) erstreckten Drehachse (4) umfaßt, der außenseitig mit einer Mehrzahl von radial vorstehenden Zähnen (6) oder dergleichen Reiß- oder Schlagmitteln versehen ist.

3. Schredder (1) nach Anspruch 2,
**dadurch gekennzeichnet,**
**daß** der Rotationskörper (5) einen mittleren Durchmesser von zumindest 700 Millimetern aufweist und die Zähne (6) oder dergleichen Reiß- oder Schlagmittel mindestens 12 Millimeter gegenüber einer Außenfläche des Rotationskörpers (5) radial vorragen, wobei mehrere Zähne (6) oder dergleichen Reiß- oder Schlagmittel über die axiale Erstreckung des Rotationskörpers (5) verteilt angeordnet sind.

4. Schredder (1) nach einem der Ansprüche 2 oder 3,
**dadurch gekennzeichnet,**
**daß** die Zähne (6) oder dergleichen Reiß- oder Schneidmittel mit zumindest einer dem Rotationskörper (5) zugeordneten Gegenschlag- oder -schneidkante (7) zusammenwirken können, die insbesondere unterhalb der Erstreckung des Rotationskörpers (5) steht.

5. Schredder (1) nach einem der Ansprüche 4 oder 5,
**dadurch gekennzeichnet,**
**daß** bezüglich der Drehrichtung (D) des Rotationskörpers (5) der Gegenschlag- oder -schneidkante (7) zumindest eine Zerkleinerungsleiste (8) nachgeordnet ist, in die die Zähne (6) kämmend eingreifen.

6. Schredder (1) nach einem der Ansprüche 1 bis 5,
**dadurch gekennzeichnet,**
**daß** der Rotationskörper (5) über seinen axialen Verlauf einen variierenden Durchmesser (D1...D2) aufweist.

7. Schredder (1) nach Anspruch 6,
**dadurch gekennzeichnet,**
**daß** der Durchmesser (D1...D2) sich in Fahrtrichtung (F) verkleinert.

8. Schredder (1) nach einem der Ansprüche 2 bis 7,
**dadurch gekennzeichnet,**
**daß** die Achse des Rotationskörpers (5) derart abgewinkelt zur Fahrtrichtung (F) steht, daß sie in Fahrtrichtung (F) auf die Quermitte des Fahrzeugs (3) zuläuft.

9. Schredder (1) nach einem der Ansprüche 1 bis 8,
**dadurch gekennzeichnet,**
**daß** der Schredder in eine erste Querrichtung (Q1) von dem Fahrzeug (3) aus seitlich ausgreift und von dem Schredder (1) abgetragenes Material in einen Bereich einer gegenüber liegenden Querrichtung (Q2) bezüglich der Fahrtrichtung (F) des Fahrzeugs (3) auswerfbar ist.

10. Schredder (1) nach Anspruch 9,
**dadurch gekennzeichnet,**
**daß** der Rotationskörper (5) zumindest bereichsweise von einer mit einer Querkomponente (Q2) fördernden Auswurfeinrichtung (10) übergriffen ist.

11. Schredder (1) nach Anspruch 10,
**dadurch gekennzeichnet,**
**daß** die Auswurfeinrichtung (10) frei von motorisch antreibbaren Fördermitteln ausgebildet ist.

12. Schredder (1) nach einem der Ansprüche 10 oder 11,
**dadurch gekennzeichnet,**
**daß** die Auswurfeinrichtung (10) einen äußeren Trichter (11) ausbildet, der in einen quer ausgreifenden Wurfkanal (12) übergeht.

13. Schredder (1) nach einem der Ansprüche 10 bis 12,
**dadurch gekennzeichnet,**
**daß** in der Auswurfeinrichtung (10) eine Mehrzahl von das eintretende Material schräg umlenkenden Leitblechen (13) vorgesehen ist.

14. Schredder (1) nach Anspruch 13,
**dadurch gekennzeichnet,**
**daß** die Leitbleche (13) zumindest teilweise über ihren Verlauf von unten nach oben einen sich zueinander vergrößernden Abstand aufweisen.

15. Fahrzeug (3) mit einem an einem Anbaurahmen (14) gehaltenen Schredder (1) nach einem der Ansprüche 1 bis 14.
